# EUROPEAN PATENT SPECIFICATION

(11) **EP 0 823 918 B1**
(45) Date of publication and mention of the grant of the patent: **21.03.2001**
(21) Application number: 96913539.1
(22) Date of filing: 02.05.1996
(51) Int. Cl.: C08F 10/00, C08F 4/64, B29C 41/04

(54) **ROTATION MOULDING PROCESS OF POLYETHYLENE HAVING A CONTROLLED PARTICLE SIZE AD MORPHOLOGY**
SCHLEUDERGUSSVERFAHREN FÜR POLYETHYLEN MIT FESTGELEGTER TEILCHENGRÖSSE UND MORPHOLOGIE
ROTOMOULAGE POUR POLYETHYLENE A GROSSEUR ET MORPHOLOGIE DE PARTICULES REGULEES

(30) Priority: 02.05.1995 FI 952097
(43) Date of publication of application: 18.02.1998
(73) Proprietor: Borealis Technology Oy, 06101 Porvoo (FI)
(72) Inventor: KALLIO, Kalle, FIN-07740 Vanhakylä (FI); PALMQVIST, Ulf, 444 41 Stenungsund (SE); KNUUTTILA, Hilkka, FIN-06400 Porvoo (FI); FATNES, Anne, Marie, N-3960 Stathelle (NO)
(74) Representative: Hakkila, Maini Annika
(86) International application number: FI9600242
(87) International publication number: WO9634898

(56) References cited:
- EP-A- 0 295 312
- EP-A- 0 436 326
- EP-A- 0 516 458
- WO-A-93/23439
- WO-A-94/14856
- WO-A-94/21691
- US-A- 4 508 859
- US-A- 4 906 428

## Description

The invention is related to a rotational moulding process of polyethylene, to an ethylene polymer having a controlled particle size and morphology, and to a method for making such polymers, which are useful in such applications, where proper particle size and good morphology are mandatory requirements.

One such application is so-called rotational moulding, which is a process where hollow plastic articles can be produced. In the process very fine plastic powder is loaded into a slit, hollow metal mould. Then the mould is rotated round the equatorial and polar axes while the polymer powder is heated above its melting point. When the melted plastic covers the inside surface of the mould, the assembly is cooled to room temperature and the part removed.

The properties of the final article can be influenced by the choice of the plastic material used as raw material, the plastic powder characteristics and the process parameters such as heating temperature, heating time, cooling time and other conditions. Especially the polymer powder characteristics are very important parameters.

Good molding resins for rotational molding resins should satisfy, among others, the following criteria:
- The granules must be free flowing, substantially spherical in shape and free of any tails or hairs, which could decrease the flowability of the resin.
- The particle size should be relatively small and the particle size distribution of the polymer particles should be relatively narrow, and
- The bulk density of the granules should be high to provide good flowability and close compaction in the mold.

According to the conventional prior art the polymers for rotational molding have been prepared by first melt compounding the polymerization reactor product and by pelletizing to granules. Additives are often melt compounded with the polymer in this step. Then the pellets are ground and classified to proper particle size. The pelletizing and grinding operations are costly because of high energy consumption, and frequently produce also irregularly shaped particles, which impede flowability and reduce bulk density.

It has also been studied the use of reactor "fluff' coming out from the polymerization reactor, for the rotational molding process. However this typically produces polymer particles having too large particle size and wide particle size distribution. Therefore it has been not possible to produce good polyethylene resins for rotational molding process in this way. Another solution to avoid the problems above has been disclosed in US-patent 4,408,859. According to this patent the polymer fluff is blended with additive materials for making a masterblend, this masterblend is mixed in an intensive mixer with additional thermoplastic granules below the softening point and the mixing is continued until at least 80 % of the granules are smaller than about 30 mesh and the bulk density has been increased by at least 10 % over unfinished granules. Thereafter the mixture is allowed to cool and a substantial part of the particles larger than 30 mesh is removed. Though eliminating the melt compounding, pelletizing and grinding steps according to the conventional technique, this method only replaces these steps with other energy consuming operations and do not make possible to manufacture polymers for rotational molding process straight in the polymerization reactor without any additional need to reduce the polymer particle size.

The object of the invention is a rotational moulding process of polyethylene resin, which is produced in a polymerization reactor in such form, that it can be used without any additional operations for application, where controlled particle size and good morphology are essential. Another object of the invention is a polymerization process, which produces in particle form such polyethylene, which is applicable for rotational molding process without need for additional pelletizing, grinding or intensive mixing steps.

According to the invention it has been found that the objects above can be achieved by carefully making certain selections related to the catalyst type, catalyst particle size and particle size distribution. Thus the rotational moulding process according to the invention of ethylene polymers or copolymers having a controlled particle size and morphology is characterized in that the process comprises following steps:
1) ethylene is polymerized or copolymerized under ethylene polymerizing conditions in the presence of a supported metallocene catalyst, having an average particle size within the range of 10-40 µm and the residence time at the polymerization is selected so as to achieve a polymer having an average particle size between 0.2-0.5 mm and the proportion of fractions between 0.1 and 0.6 mm is at least 80 %, and
2) rotation moulding of the poloymer from 1), achieved without an additional pelletizing, grinding or intensive mixing steps.

According to the invention it has been surprisingly found that by using metallocene catalysts having certain properties it is possible to manufacture polyethylene resins having the desired particle properties straight in the polymerization reactor without need to additional grinding or intensive mixing steps. These polyethylene resins further have suitable melt flow and strength properties, which are required in certain special applications, such as rotational moulding process. Thus metallocene catalysts produce spherical, free flowing polymer granules, the polymer particle size disribution is narrow and the bulk density of the powder is high and polymer powder morphology can be controlled with catalyst. The extra advantage over polymers produced with Ziegler-Natta catalysts is that metallocene catalyst produce narrow molecular weight and very even comonomer distribution. This results in narrow melting temperature distribution, which is very useful in rotational moulding.

While it is known for example from Research Disclosure No. 35334 (September 1993/pages 603-611) that metallocene catalysts can be applied to rotational moulding applications, the products made according to this publication have been made by conventionally grinding. Further this publication gives very little information about the catalyst properties.

To produce certain polymer particle size there are some process factors affecting onto polymer particle formation process. At the first, the catalyst particle size will affect onto polymer particle size and morphology. By increasing average particle size the polymer particle size is also increased. A suitable average particle size is 0.2-0.5 mm, preferably 0.3-0.4 mm. The amount of fines in polymer is reduced when catalyst particle has good morphology. The proportion of the fractions between 0.1 mm and 0.6 mm is at least 80 %. Good morphology is attained when all active components (metallocene and methylalumoxane) are fixed and kept inside porous silica particle. Especially good polymer morphology is attained with spherical catalyst particles which are giving spherical polymer particles having narrow particle size distribution. The most favourable catalyst particle size for rotational moulding applications will be 10-40 µm, preferably 14-40 µm.

The density of the polymers is controlled by addition of conomomers to the polymerization. Suitable comonomers to be used according the invention are C₃-C₈ olefins, preferably butene or 1-hexene.

As a catalyst a metallocene type catalyst is used. As metallocene compounds it is possible to use any kind and type of metallocene. Thus suitable metallocene compounds are those which have a formula (Cp)ₘRₙMR'ₒXₚ, where Cp is an unsubstituted or substituted and/or fused homo or heterocyclopentadienyl, R is a group having 1-4 atoms and bridging two Cp rings, M is a transition metal of group 4A, 5A or 6A (Hubbard), R' is C₁-C₂ hydrocarbyl or hydrocarboxy group and X is a halogen atom, wherein m is 1-3, n is 0 or 1, o is 0-3 and p is 0-3 and sum n+o+p corresponds the oxidation state of the transition metal M. The transition metal M is preferably zirconium, hafnium or titanium, most preferably zirconium. Examples from suitable metallocene compounds are, among others), bis(n-butyyli-cyclopentadienyl)zirconium dichloride and bis(indenyl)zirconiumdichloride.

The polymerization activity of the catalyst component described above can be increased by known activator compounds, such as alumoxane compounds. One method is to add the alumoxane compound to the metallocene containing catalyst compound. In that case the alumoxane compound is preferably added by impregnation method, in which a solution of alumoxane compound is impregnated into the catalyst component. The amount of such solution is preferably not greater than the total free pore volume of the catalyst compound already containing the metallocene compound. After impregnation the solvent can be removed for example by evaporation. Another method for applying activator compounds is to add it straight into the polymerization reactor along with the metallocene containing catalyst component.

Suitable activators are for example alumoxane compounds having a formula R-(Al(R)-O)ₙ-AIR₂ or (-Al(R)-O-)ₘ, where n is 1-40, m is 3-40 and R is a C₁-C₈ alkyl group. Preferably R is a methyl group.

The support or carrier material used in the method according to the invention may be any porous, substantially inert support, such as an inorganic oxide or salt. In practise the support used is preferably a fine-grained inorganic oxide such as an inorganic oxide of an element of Group 2(A), 3(B) or 4 of the Periodic Table (Hubbard), most preferably silica, alumina or a mixture or derivative of these. Other inorganic oxides which can be used either alone or together with silica, alumina or silica-alumina, are magnesium oxide, titanium dioxide, zirconium oxide, or aluminum phosphate.

The support used in the method is preferably dry. In general, metal oxide supports also contain surface hydroxyl groups which may react with metallocene or alumoxane. Therefore the support can be dehydrated or dehydroxylated before use. Such treatment may be either a thermal treatment or a reaction between the surface hydroxyl groups of the support and a reagent contacted with it.

Preferable support materials to be used according to the invention are porous silica or alumina carriers. The pore volume is not critical and can be varied within rather wide limits, but normally in commercial support materials the pore volume is preferably approx. 0,9 - 3.5 ml/g.

Residence time in the polymerization reactor is another polymerization parameter which has been found to affect onto polymer particle size. By increasing process residence time the polymer particle size will become larger. The residence time is very typical for process and reactor type. Thus according to the invention the residence time in loop slurry reactor is 40-90 min and in fluidized gas phase reactor residence time is 4-8 hours. When polymer particle size is needed to control, at first rough control is made with choosing correct catalyst particle size and after that more accurate control can be made with controlling residence time of polymerization reactor. In practise, residence time operational window is quite narrow, so big changes can not be made in residence time for contolling polymer particle size.

The invention will be further illustrated by referring to the examples below.

### Example 1

### Catalyst preparation

1 g Crossfield ES70X silica having a surface area of 273 m², pore volume of 1,54 ml/g and average particle size of 15 µm, was calcinated at 500 °C and weighed into septa bottle. 1,5 ml complex solution of n-butylcyclopentadiene zirconium dichloride (11 mg), 30 w-% methylalumoxane (1,15 ml) and dry toluene was added onto silica. After 30 min reaction time evaporation of toluene was started at 25 °C by using nitrogen flow. After 60 minutes the catalyst was ready.

### Polymerization

130 mg solid catalyst powder was introduced into 3 l autoclave type polymerization reactor. 1,8 l of isobutane was used as a polymerization medium. Ethylene partial pressure was 5 bar and total pressure was 17,7 bar at 80 °C. 40 ml of 1-hexene was used as a comonomer. After 60 min polymerization the reactor was cooled and ethylene and i-butane were flashed out. The polymer yield was 550 g of LLDPE which gives catalyst activity of 4,2 kg LLDPE/g cat h

The polymer had an MFR₂ of 2.70, MFR₂₁ of 42,8 and bulk density of 390 kg/m³. The sieving results were as follows:

| | |
|---|---|
| Fines % | 4,4 |
| Bottom | 1,1 |
| 0,071 | 3,3 |
| 0,10 | 32,2 |
| 0,250 | 35,2 |
| 0,355 | 25,7 |
| 0,8 | 1,3 |
| 2,0 | 1,8 |

The average particle size was 0,37 mm.

### Example 2

The catalyst was produced as in Examle 1, except that a silica having an average particle size of 27 µm was used.

The polymerization was carried out as in Example 1. The polymer had an MFR₂ of 3,5, MFR₂₁ of 46,3 and a bulk density of 425 kg/m³.

The polymer had a following sieve analysis:

| | |
|---|---|
| Fines % | 7,7 |
| Bottom | 1,9 |
| 0,071 | 5.8 |
| 0,10 | 27,1 |
| 0,250 | 17,3 |
| 0,355 | 43,1 |
| 0,80 | 4,4 |
| 2,0 | 0,3 |

The average particle size of the polymer was 0,44 mm.

### Example 3

The catalyst was prepared as in Example 1 except that the silica used has an average particle size of 40 µm. The polymerization was carried out as in Example 1. The polymer yield was 362 g which gives catalyst activity of 2,7 kg polymer/g cat h. The MFR₂ was 3,2, MFR₂₁ was 52,1 and bulk density was 390 kg/m³.

The sieving results was as follows:

| | |
|---|---|
| Fines % | 8,5 |
| Bottom | 2,3 |
| 0,071 | 6,2 |
| 0,10 | 31,5 |
| 0,250 | 18,9 |
| 0,355 | 35,0 |
| 0,80 | 5,3 |
| 2,0 | 0,8 |

The average particle size of the polymer was 0,43 mm.

### Example 4 (comparison)

A catalyst was prepared according to Example 1, except that the average particle size of the catalyst of the catalyst was 54 µm. The catalyst was used to polymerize ethylene according to Example 1. The polymer yield was 389 g which gives a catalyst activity of 3,2 kg polymer/g cat h. The MFR₂ was 3,0 and the bulk density was 408 kg/m³.

The sieving results were as follows:

| | |
|---|---|
| Fines % | 5,4 |
| Bottom | 3,1 |
| 0,071 | 2,3 |
| 0,10 | 26,3 |
| 0,250 | 16,6 |
| 0,355 | 34,1 |
| 0,80 | 16,7 |
| 2,0 | 0,6 |

The average polymer particle size was 0,56 mm.

### Examples 5-7

### Catalyst preparation

10 g Crossfield ES70X silica (S.A. =273 m², PV=1,54 ml/g_{,} APS=14 µm), calcinated at 500 °C for 10 hours, was weighed into septa bottle. 15 ml complex solution of n-butylcyclopentadiene zirconium dichloride (110 mg) and 30 w-% methylalumoxane (11,5 ml) and dry toluene (3,5 ml) was added onto silica. After 30 min reaction time evaporation of toluene was started at 25 °C by using nitrogen flow. After 60 minutes the catalyst was ready.

### Catalyst polymerization

127 mg solid catalyst powder was introduced into 3 l autoclave type polymerization reactor. 1,8 l of isobutane was used as a polymerization medium. Ethylene partial pressure was 5 bar and total pressure was 17,7 bar at 80 °C. 40 ml of hexene was used as a comonomer. After the polymerization the reactor was cooled and ethylene and isobutane were flashed out.

The results are presented in the accompanying Table.

| | Example 5 | Example 6 | Example 7 |
|---|---|---|---|
| Residence time min | 30 | 90 | 120 |
| Activity kg/g cat h | 4,3 | 1,00 | 1,50 |
| Sieve analysis | | | |
| Fines % | 6,7 | 5,7 | 6,2 |
| Bottom | 3,9 | 2,6 | 3,6 |
| 0,071 | 2,9 | 3,2 | 2,6 |
| 0,10 | 50.6 | 31,7 | 26,4 |
| 0,250 | 29,4 | 24,3 | 26,3 |
| 0,355 | 11,2 | 27,2 | 34,5 |
| 0,80 | 1,4 | 8,8 | 5,4 |
| 2,0 | 0,8 | 1,9 | 0,5 |
| Average particle size mm | 0,296 | 0,483 | 0,429 |

### Example 8

A catalyst was prepared as in Example 1, and the polymerization was carried out as described before.

The average particle size was of the powder was 0,230 mm. The dry flow properties of the powder was 18,2 s/g and bulk density was 445 kg/m3.

### Rotomoulding

1,5 kg of the polymer was dry mixed with the ordinary stabilizers and the stabilized polymer powder was then entered into a box mould, and rotomoulding of the polymer was perfomed in a Rotospeed E60 Express rotomoulding machine. After 10 minutes heating and 20 minutes cooling time, the box was demoulded. Samples for testing was cut from the box.

Elongation at break (100 mm/min) was measured, and found to be 350%. Dart impact at -20 °C was measured and the peak force found to be 1480 N/mm.

### Example 9

Catalyst preparation was done as in Example 1, except that a silica with APS 39 micron was used. Polymerization was carried out as in the previous example.

The average particle size of the powder was 0,270 mm. The dry flow properties of the powder was 14,5 s/g and bulk density was 450 kg/m³.

### Rotomoulding and product evaluation

Rotomoulding of 1,5 kg of the powder was done as described in Example 8.

Evaluation of the rotomoulded samples gave the following results:

Elongation at break (100 mm/min ) was 300%. Dart impact measured as peak force at -20 °C was found to be 1450 N/mm.

### Example 10

Catalyst preparation and the polymerization was done as in Example 1.
The dry flow properties of the powder was 15,0 s/g and bulk density was 435 kg/m³.

### Rotomoulding and product evaluation

1,5 kg of the powder was additivated and rotomoulded as described in Example 8.

Evaluation of the rotomoulded samples gave the following results:

Elongation at break (100 mm/min) was > 400%. Dart impact at -20 °C measured as peak force was 1500 N/mm.

### Example 11 (comparison)

Reference polymer powder was obtained from a commercial gas phase reactor using Ziegler-Natta catalyst. The powder was ground in a Wedco mill to obtain acceptable polymer particle size.

Sieving results after grinding::

| | |
|---|---|
| >600µ | 1.4 |
| 500µ | 7.0 |
| 425µ | 39.6 |
| 300µ | 34.1 |
| 212µ | 13.3 |
| 150µ | 3.0 |
| pan | 1.6 |

Bulk density was 335 kg/m³, MFR₂ = 3.5 and density = 934 kg/m³. Dry flow properties was measured to 21 seconds /100 grams.

### Rotomoulding and evaluation

2.5 kg polymer powder was stabilized by dry mixing with additives and rotomoulded as described in Example 8, ecxcept that 13 minutes heating time and 25 minutes cooling time was used. Samples for testing was cut from the box.

Dart impact was measured and found to be 1240 N/mm. Elongation at break was 120 %.

### Example 12 (comparison)

Reference polymer was obtained from a commercial gas phase reactor by using Ziegler-Natta catalyst. The polymer was stabilized before pelletizing, pelletized and ground in a Wedco mill to obtain a good rotomoulding powder.

Polymer properties :
MFR₂ = 3.5 , density = 934 kg/m³

Sieving results:

| | |
|---|---|
| >600µ | 0.6 |
| 500µ | 5.8 |
| 425µ | 19.7 |
| 300µ | 34.2 |
| 212µ | 28.8 |
| 150µ | 10.7 |
| pan | 0.2 |

Pourability was 23 sec/100 grams. Bulk density was 380 kg/m³.

Rotomoulding was done as in Example 12. Dart impact was measured and found to be 1510 N/mm. Elongation at break (100 mm/min) was 90%.

## Claims

1. Rotational moulding process of ethylene polymers or copolymers having a controlled particle size and morphology, **characterized in** that the process comprises following steps:
1) polymerizing or copolymerizing of ethylene under ethylene polymerizing conditions in the presence of a supported metallocene catalyst having an average particle size within the range of 10-40 µm and selecting the residence time at the polymerization so as to achieve a polymer having an average particle size between 0.2-0.5 mm and the proportion of the fraction between 0.1 mm and 0.6 mm being at least 80 %, and
2) rotation moulding of the polymer achieved in 1) without an additional pelletizing, grinding or intensive mixing steps.

2. Process according to claim 1, **characterized in** that in step 1) the polymer is produced in a slurry polymerization reactor, where the average residence time is 40-90 minutes.

3. Process according to claim 1, **characterized in** that in step 1) the polymer is produced in a gas phase reactor, where average residence time is 4-8 hours.

4. Process according to any one of claims 1-3, **characterized in** that said metallocene is a metallocene compound having a formula (Cp)ₘRₙMR'ₒXₚ, where Cp is an unsubstituted or substituted and/or fused homo or heterocyclopentadienyl, R is a group having 1-4 atoms and bridging two Cp rings, M is a transition metal group 4A, 5A or 6A (Hubbard), R' is C₁-C₂ hydrocarbyl or hydrocarboxy group and X is a halogen atom, wherein m is 1-3, n is 0 or 1, o is 0-3, p is 0-3 and sum n+o+p corresponds the oxidation state of the transition meal M.

5. Process according to claim 4, **characterized in** that said carrier is selected from alumina, silica or silica-alumina.

6. Rotational moulding product obtainable by a process according to any one of claims 1-5.

## Patentansprüche

1. Rotationsformverfahren für Ethylenpolymere oder -copolymere mit einer geregelten Teilchengröße und Morphologie,
**dadurch gekennzeichnet, dass**
das Verfahren die folgenden Schritte umfasst:
1) Polymerisieren oder Copolymerisieren von Ethylen unter Ethylenpolymerisationsbedingungen in Gegenwart eines geträgerten Metallocenkatalysators mit einer mittleren Teilchengröße innerhalb des Bereiches von 10 bis 40 µm und Auswählen der Verweilzeit bei der Polymerisation derart, dass ein Polymeres erzielt wird, welches eine mittlere Teilchengröße zwischen 0,2 bis 0,5 mm besitzt und bei welchem der Anteil der Fraktion zwischen 0,1 mm und 0,6 mm wenigstens 80 % beträgt, und
2) Rotationsformen des in 1) erzielten Polymeren ohne zusätzliche Granulierungs- oder Mahlschritte oder intensive Mischschritte.

2. Verfahren gemäß Anspruch 1, dadurch gekennzeichnet, dass in Schritt 1) das Polymere in einem Aufschlämmungspolymerisationsreaktor hergestellt wird, in dem die mittlere Verweilzeit 40 bis 90 Minuten beträgt.

3. Verfahren gemäß Anspruch 1, dadurch gekennzeichnet, dass in Schritt 1) das Polymere in einem Gasphasenreaktor hergestellt wird, in dem die mittlere Verweilzeit 4 bis 8 Stunden beträgt.

4. Verfahren gemäß einem der Ansprüche 1 bis 3, dadurch gekennzeichnet, dass das Metallocen eine Metallocenverbindung mit einer Formel (Cp)ₘRₙMR'ₒXₚ ist, in der Cp ein unsubstituiertes oder substituiertes und/oder anneliertes homo- oder hetero-Cyclopentadienyl ist, R eine Gruppe ist, die 1 bis 4 Atome besitzt und die zwei Cp-Ringe verbrückt, M ein Übergangsmetall der Gruppe 4A, 5A oder 6A (Hubbard) ist, R' eine C₁-C₂-Hydrocarbyl-oder C₁-C₂-Hydrocarboxygruppe ist und X ein Halogenatom ist, wobei m gleich 1 bis 3 ist, n gleich 0 oder 1 ist, o gleich 0 bis 3 ist, p gleich 0 bis 3 ist und die Summe n+o+p dem Oxidationszustand des Übergangsmetalls M entspricht.

5. Verfahren gemäß Anspruch 4, dadurch gekennzeichnet, dass der Träger aus Aluminiumoxid, Siliciumoxid oder Siliciumoxid-Aluminiumoxid ausgewählt ist.

6. Rotationsformungsprodukt, das durch ein Verfahren gemäß einem der Ansprüche 1 bis 5 erhältlich ist.

## Revendications

1. Procédé de rotomoulage de polymère ou copolymère d'éthylène ayant une morphologie et une taille particulaire contrôlée, caractérisé en ce que le procédé comprend les étapes suivantes :
1) polymérisation ou copolymérisation d'éthylène dans des conditions de polymérisation d'éthylène en présence d'un catalyseur métallocène supporté ayant une taille particulaire moyenne dans la plage de 10-40 µm et sélection du temps de séjour en polymérisation de façon à obtenir un polymère ayant une taille particulaire moyenne entre 0,2-0,5 mm et la proportion de la fraction entre 0,1 mm et 0,6 mm étant d'au moins 80%, et
2) rotomoulage du polymère obtenu en 1) sans étape supplémentaire de granulation, broyage ou mélange intensif.

2. Procédé selon la revendication 1, caractérisé en ce que à l'étape 1) le polymère est produit dans un réacteur de polymérisation en suspension dans lequel le temps de séjour moyen est de 40-90 minutes.

3. Procédé selon la revendication 1, caractérisé en ce que à l'étape 1) le polymère est produit dans un réacteur en phase gazeuse, dans lequel le temps de séjour moyen est de 4-8 heures.

4. Procédé selon l'une quelconque des revendications 1-3, caractérisé en ce que ledit métallocène est un composé métallocène ayant une formule (Cp)ₘRₙMR'ₒXₚ, dans laquelle Cp est homo ou hétérocyclopentadiényle non substitué ou substitué et/ou fusionné, R est un groupe ayant 1-4 atomes et reliant deux cycles Cp, M est un groupe des métaux de transition 4A,5A ou 6A (Hubbard), R' est un groupe hydrocarboxy ou hydrocarbyle en C₁ -C₂ et X est un atome d'halogène, m étant 1-3, n étant 0 ou 1, o étant 0-3, p étant 0-3 et la somme n+o+p correspond à l'état d'oxydation du métal de transition M.

5. Procédé selon la revendication 4, caractérisé en ce que le support est choisi à partir d'alumine, de silice ou de silice-alumine.

6. Produit de rotomoulage pouvant être obtenu par un procédé selon l'une quelconque des revendications 1-5.
